(19) Europäisches Patentamt
European Patent Office
Office européen des brevets

(11) **EP 2 680 032 A1**

(12) **EUROPÄISCHE PATENTANMELDUNG**

(43) Veröffentlichungstag:
**01.01.2014 Patentblatt 2014/01**

(51) Int Cl.:
***G01S 13/38*** *(2006.01)*

(21) Anmeldenummer: **12174439.5**

(22) Anmeldetag: **29.06.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Friedrich-Alexander-Universität Erlangen-Nürnberg**
**91054 Erlangen (DE)**

(72) Erfinder:
• **Kölpin, Alexander**
**91058 Erlangen (DE)**
• **Vinci, Gabor**
**91058 Erlangen (DE)**

(74) Vertreter: **Klinski, Robert**
**Patentship**
**Patentanwaltskanzlei**
**Elsenheimerstraße 65**
**DE-80687 München (DE)**

(54) **Elektronische Abstandserfassungsvorrichtung**

(57) Die vorliegende Erfindung betrifft eine elektronische Abstandserfassungsvorrichtung 100, mit einer Sendevorrichtung 101 zum Aussenden eines ersten Radarsignals mit einer ersten Frequenz in Richtung einer Reflexionsfläche 103 und zum Aussenden eines zweiten Radarsignals mit einer zweiten Frequenz in Richtung der Reflexionsfläche 103; einer Empfangsvorrichtung 107 zum Empfangen eines ersten, an der Reflexionsfläche 103 reflektierten Radarsignalanteils des ersten Radarsignals und zum Empfangen eines zweiten, an der Reflexionsfläche 103 reflektierten Radarsignalanteils des zweiten Radarsignals und zum Bestimmen eines ersten Phasenunterschieds zwischen dem ersten ausgesendeten Radarsignal und dem ersten reflektierten Radarsignalanteil und eines zweiten Phasenunterschieds zwischen dem zweiten ausgesendeten Radarsignal und dem zweiten reflektierten Radarsignalanteil und einer Bestimmungsvorrichtung 106 zum Bestimmen des Abstands zwischen der Abstandserfassungsvorrichtung 100 und der Reflexionsfläche 103 auf Basis des ersten Phasenunterschieds und des zweiten Phasenunterschieds. Daneben betrifft die vorliegende Erfindung ein entsprechendes Verfahren.

Fig. 1

100

EP 2 680 032 A1

**Beschreibung**

Die vorliegende Erfindung betrifft eine elektronische Abstandserfassungsvorrichtung.

In herkömmlichen Radargeräten wird eine Genauigkeit im Subwellenlängenbereich durch Phasenmessungen im Basisband bei niedrigen Frequenzen realisiert. Dies führt jedoch zu Fehlertoleranzen aufgrund von Rauschen, nichtlinearen Effekten der Mischkomponenten und Digitalisierungsfehlern, wie beispielsweise Quantisierungsfehlern. Zusätzlich ist die Auflösung von Radargeräten mit der verwendeten Bandbreite korreliert, die durch die Standardisierung des Frequenzspektrums begrenzt ist. Herkömmliche Radarmodule sind daher lediglich in der Lage, Genauigkeiten von mehreren Wellenlängen zu erreichen. Im Gegensatz dazu messen Interferometer mit einer Genauigkeit unterhalb eines Wellenlängenbereiches.

Bei Phasenmessungen mit einem Einzelempfänger und einer unmodulierten Einzelsignalquelle über mehrere Wellenlängen hinweg entsteht ein Mehrdeutigkeitsproblem, da das System nicht in der Lage ist, zwischen periodischen Phasenwiederholungen zu unterscheiden, sobald der Phasenunterschied über ein Bogenmaß von $2\pi$ springt. Daher kann die Entfernung zu einer Reflexionsfläche lediglich dann eindeutig gemessen werden, wenn sich die Positionsvariation der Reflexionsfläche innerhalb eines Bereiches einer Wellenlänge des ausgesandten Signals befindet. Bei dieser Messtechnik kann keine absolute Messung der Entfernung sondern nur eine relative Messung innerhalb eines begrenzten Bereichs der Wellenlänge erfolgen.

Es ist die Aufgabe der vorliegenden Erfindung, eine Abstandserfassungsvorrichtung und ein Abstandserfassungsverfahren anzugeben, bei dem der Bereich vergrößert wird, in dem eine eindeutige Abstandsmessung durchgeführt werden kann.

Diese Aufgabe wird durch Gegenstände mit den Merkmalen nach den unabhängigen Ansprüchen gelöst. Vorteilhafte Weiterbildungen sind Gegenstand der unabhängigen Ansprüche, der Beschreibung und der Zeichnungen.

Gemäß einem ersten Aspekt wird die erfindungsgemäße Aufgabe durch eine elektronische Abstandserfassungsvorrichtung gelöst, mit einer Sendevorrichtung zum Aussenden eines ersten Radarsignals mit einer ersten Frequenz in Richtung einer Reflexionsfläche und zum Aussenden eines zweiten Radarsignals mit einer zweiten Frequenz in Richtung der Reflexionsfläche, einer Empfangsvorrichtung zum Empfangen eines ersten, an der Reflexionsfläche reflektierten Radarsignalanteils des ersten Radarsignals und zum Empfangen eines zweiten, an der Reflexionsfläche reflektierten Radarsignalanteils des zweiten Radarsignals und zum Bestimmen eines ersten Phasenunterschieds zwischen dem ersten ausgesendeten Radarsignal und dem ersten reflektierten Radarsignalanteil und eines zweiten Phasenunterschieds zwischen dem zweiten ausgesendeten Radarsignal und dem zweiten reflektierten Radarsignalanteil; und einer Bestimmungsvorrichtung zum Bestimmen des Abstands zwischen der Abstandserfassungsvorrichtung und der Reflexionsfläche auf Basis des ersten Phasenunterschieds und des zweiten Phasenunterschieds. Durch das Bestimmen von zwei Phasenunterschieden bei zwei Frequenzen und den aus den Phasenunterschieden resultierenden Abstandswerten wird beispielsweise der technische Vorteil erreicht, dass sich eine Abstandsmessung eindeutig über einen Bereich von mehreren Wellenlängen eindeutig durchführen lässt.

In einer vorteilhaften Ausführungsform umfasst die Empfangsvorrichtung einen Breitband-Korrelator oder ein Breitband-Interferometer zum Bestimmen des ersten Phasenunterschiedes und des zweiten Phasenunterschiedes. Dadurch wird beispielsweise der technische Vorteil erreicht, dass sich der Aufbau der Abstandserfassungsvorrichtung vereinfacht, da sich beide Phasenunterschiede von einem einzigen Korrelator oder Interferometer bestimmen lassen.

In einer weiteren vorteilhaften Ausführungsform umfasst die Empfangsvorrichtung einen ersten Korrelator zum Bestimmen des ersten Phasenunterschieds und einen zweiten Korrelator zum Bestimmen des zweiten Phasenunterschiedes. Dadurch wird beispielsweise der technische Vorteil erreicht, dass auf die jeweilige Frequenz angepasste Korrelatoren verwendet werden können und die Rauschleistungsdichte sinkt.

In einer weiteren vorteilhaften Ausführungsform umfasst die Empfangsvorrichtung ein erstes Interferometer zum Bestimmen des ersten Phasenunterschieds und ein zweites Interferometer zum Bestimmen des zweiten Phasenunterschiedes. Dadurch wird beispielsweise der technische Vorteil erreicht, dass auf die jeweilige Frequenz angepasste Interferometer verwendet werden können und die Rauschleistungsdichte sinkt.

In einer weiteren vorteilhaften Ausführungsform umfasst die Sendevorrichtung eine Signalquelle mit einstellbarer Frequenz zum Erzeugen des ersten Radarsignals mit der ersten Frequenz und des zweiten Radarsignals mit der zweiten Frequenz. Dadurch wird beispielsweise der technische Vorteil erreicht, dass sich beide Frequenzen mit einer einzigen Signalquelle erzeugen lassen und sich der Aufbau der Abstandserfassungsvorrichtung vereinfacht.

In einer weiteren vorteilhaften Ausführungsform umfasst die Sendevorrichtung eine erste Signalquelle zum Erzeugen des ersten Radarsignals mit der ersten Frequenz und eine zweite Signalquelle zum Erzeugen des zweiten Radarsignals mit der zweiten Frequenz. Dadurch wird beispielsweise der technische Vorteil erreicht, dass für die jeweiligen Frequenzen exakt abgestimmte Signalquellen verwendet werden und sich die Genauigkeit einer Signalerzeugung verbessert.

In einer weiteren vorteilhaften Ausführungsform umfasst die Abstandserfassungsvorrichtung eine richtungsselektive Struktur zum Kombinieren des ersten Radarsignals und des zweiten Radarsignals und zum Trennen des empfangenen ersten Radarsignalanteils und des zweiten Radarsignalanteils. Dadurch wird beispielsweise der technische Vorteil erreicht, dass sich eine Abstandsmessung mit zwei Radarsignalen unterschiedlicher Frequenz gleichzeitig durchführen lässt.

In einer weiteren vorteilhaften Ausführungsform ist die Bestimmungsvorrichtung ausgebildet, einen Differenzwert auf Basis des ersten Phasenunterschieds und des zweiten Phasenunterschieds zu berechnen. Beispielsweise kann ein Produkt des zweiten Phasenunterschieds mit einer zweiten Wellenlänge der zweiten Frequenz von einem Produkt des ersten Phasenunterschieds mit einer ersten Wellenlänge der ersten Frequenz subtrahiert werden, um den Differenzwert zu berechnen.

In einer weiteren vorteilhaften Ausführungsform ist die Bestimmungsvorrichtung ausgebildet, eine Differenzfunktion aus einer Vielzahl von Differenzwerten in Abhängigkeit unterschiedlicher Abstände der Reflexionsfläche zu berechnen.

In einer weiteren vorteilhaften Ausführungsform ist die Bestimmungsvorrichtung ausgebildet, den Abstand zur Reflexionsfläche mittels eines Vorkalibrierungsverfahrens oder eines selbstlernenden Algorithmus zu bestimmen.

In einer weiteren vorteilhaften Ausführungsform ist die Bestimmungsvorrichtung ausgebildet, die Differenzfunktion mit einer Referenzdifferenzfunktion zu vergleichen, um den Abstand zur Reflexionsfläche zu erhalten.

Gemäß einem zweiten Aspekt wird die erfindungsgemäße Aufgabe durch ein Verfahren zur Abstandserfassung mit einer Abstandserfassungsvorrichtung gelöst, mit den Schritten eines Aussendens eines ersten Radarsignals mit einer ersten Frequenz in Richtung einer Reflexionsfläche, eines Aussendens eines zweiten Radarsignals mit einer zweiten Frequenz in Richtung der Reflexionsfläche, eines Empfangens eines ersten, an der Reflexionsfläche reflektierten Radarsignalanteils des ersten Radarsignals, eines Empfangens eines zweiten, an der Reflexionsfläche reflektierten Radarsignalanteils des zweiten Radarsignals; eines Bestimmens eines ersten Phasenunterschieds zwischen dem ersten ausgesendeten Radarsignal und dem ersten reflektierten Radarsignalanteil und eines zweiten Phasenunterschieds zwischen dem zweiten ausgesendeten Radarsignal und dem zweiten reflektierten Radarsignalanteil; und eines Bestimmens eines Abstands zwischen der Abstandserfassungsvorrichtung und der Reflexionsfläche auf Basis des ersten Phasenunterschieds und des zweiten Phasenunterschieds. Dadurch wird beispielsweise ebenfalls der technische Vorteil erreicht, dass sich eine Abstandsmessung eindeutig über einen Bereich von mehreren Wellenlängen eindeutig durchführen lässt.

In einer vorteilhaften Ausführungsform umfasst das Verfahren den Schritt eines Berechnens eines Differenzwertes auf Basis des ersten Phasenunterschieds und des zweiten Phasenunterschieds. Dadurch wird beispielsweise der technische Vorteil erreicht, dass anhand des Differenzwertes ein Phasenbereich bestimmt werden kann, in dem sich das Objekt befindet. Beispielsweise kann ein Produkt des zweiten Phasenunterschieds mit einer zweiten Wellenlänge der zweiten Frequenz von einem Produkt des ersten Phasenunterschieds mit einer ersten Wellenlänge der ersten Frequenz subtrahiert werden, um den Differenzwert zu berechnen.

In einer weiteren vorteilhaften Ausführungsform umfasst das Verfahren den Schritt eines Berechnens einer Differenzfunktion aus einer Vielzahl von Differenzwerten in Abhängigkeit unterschiedlicher Abstände der Reflexionsfläche. Dadurch wird beispielsweise der technische Vorteil erreicht, dass sich die Genauigkeit des Verfahrens erhöht.

In einer weiteren vorteilhaften Ausführungsform umfasst das Verfahren den Schritt eines Bestimmens des Abstandes zur Reflexionsfläche mittels eines Vorkalibrierungsverfahrens oder eines selbstlernenden Algorithmus. Dadurch wird beispielsweise der technische Vorteil erreicht, dass sich die Abstandserfassungsvorrichtung vor einer Messung kalibrieren lässt und sich an unterschiedliche Gegebenheiten anpassen lässt.

In einer weiteren vorteilhaften Ausführungsform umfasst das Verfahren den Schritt eines Vergleichens der Differenzfunktion mit einer Referenzdifferenzfunktion, um den Abstand zur Reflexionsfläche zu erhalten. Dadurch wird beispielsweise der technische Vorteil erreicht, dass sich ein genauer Vergleich zwischen gemessener Differenzfunktion und der Referenzdifferenzfunktion durchführen lässt.

In einer weiteren vorteilhaften Ausführungsform ist die erste Frequenz ein nichtganzzahliges Vielfaches der zweiten Frequenz. Dadurch wird beispielsweise der technische Vorteil erreicht, dass sich der Erfassungsbereich vergrößert, in dem eine eindeutige Erfassung des Abstands möglich ist.

In einer weiteren vorteilhaften Ausführungsform werden das erste Radarsignal und das zweite Radarsignal gleichzeitig ausgesendet. Dadurch wird beispielsweise der technische Vorteil erreicht, dass die Abstandsmessung in kurzer Zeit durchgeführt werden kann.

In einer weiteren vorteilhaften Ausführungsform werden der erste Radarsignalanteil und der zweite Radarsignalanteil gleichzeitig empfangen. Dadurch wird beispielsweise der technische Vorteil erreicht, dass die Abstandsmessung in kurzer Zeit durchgeführt werden kann.

In einer weiteren vorteilhaften Ausführungsform ist das erste Radarsignal oder das zweite Radarsignal ein sinusförmiges Dauerstrichsignal, ein frequenzmoduliertes

Dauerstrichsignal, ein Stufenfrequenz-Dauerstrichsignal oder ein gepulstes Radarsignal. Dadurch wird beispielsweise der technische Vorteil erreicht, dass besonders geeignete Signale zur Abstandsmessung verwendet werden.

Weitere Ausführungsbeispiele der Erfindung sind in den Zeichnungen dargestellt und werden im Folgenden näher beschrieben.

Es zeigen:

Fig. 1 eine Konzeptansicht der erfindungsgemäßen Abstandserfassungsvorrichtung mit zwei Korrelatoren;

Fig. 2 eine Konzeptansicht der erfindungsgemäßen Abstandserfassungsvorrichtung mit einer Vielzahl von Korrelatoren;

Fig. 3 eine detaillierte Ansicht der erfindungsgemäßen Abstandserfassungsvorrichtung;

Fig. 4 eine Differenzfunktion; und

Fig. 5 ein Blockdiagramm mit den erfindungsgemäßen Verfahrensschritten.

Die vorliegende Erfindung verringert Fehlertoleranzen bei einer Radar-Abstandmessung durch eine Phasenanalyse mehrerer reflektierter Wellen in der Funkfrequenzdomäne und ermöglicht eine hohe Genauigkeit für schmalbandige Signale. Mehrdeutigkeiten für Abstände von mehr als einer Wellenlänge können beispielsweise durch Verwenden von zwei oder mehr Signalen mit nicht-ganzzahligen Vielfachen ihrer Trägerfrequenzen und einen gegenseitigen Vergleich der beobachteten Phasenunterschiede dieser Signale beseitigt werden. Die Erfindung ermöglicht es, Entfernungen von mehreren Wellenlängen mit einer Genauigkeit im Subwellenlängenbereich und extrem niedrigen Fehlertoleranzen zu messen. Die Erfindung beschreibt eine Radar-Abstandserfassungsvorrichtung mit einer Genauigkeit unter der Wellenlänge des Radarsignals, die einen eindeutigen Abstanderfassungsbereich über mehrere Wellenlängen erlaubt.

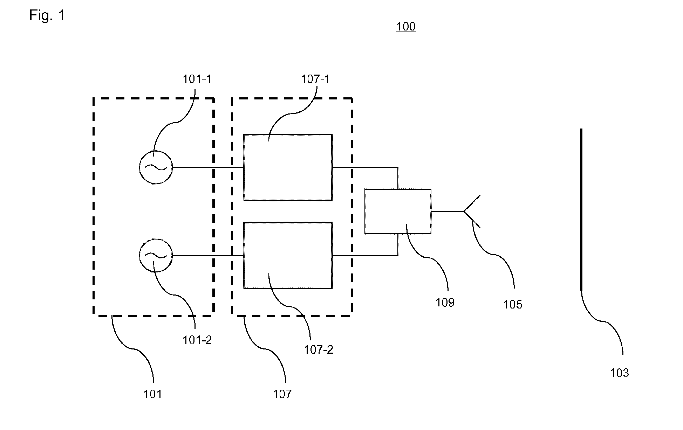

Fig. 1 zeigt eine Konzeptansicht der erfindungsgemäßen Abstandserfassungsvorrichtung 100. Die elektronische Abstandserfassungsvorrichtung 100 umfasst eine Sendevorrichtung 101 zum Aussenden eines ersten Radarsignals mit einer ersten Frequenz in Richtung einer Reflexionsfläche 103 und zum Aussenden eines zweiten Radarsignals mit einer zweiten Frequenz in Richtung der Reflexionsfläche 103. Bei diesen Radarsignalen kann es sich beispielsweise um Dauerstrichsignale (CW-Signale) bei unterschiedlichen Frequenzen handeln.

Unter der Annahme, dass die Quellen emittieren, werden diese dann kombiniert und gleichzeitig durch das allgemeine Testobjekt emittiert.

Die Sendevorrichtung 101 umfasst eine erste Signalquelle 101-1 zum Erzeugen des ersten Radarsignals mit der ersten Frequenz und eine zweite Signalquelle 101-2 zum Erzeugen des zweiten Radarsignals mit der zweiten Frequenz.

Das erste Radarsignal und das zweite Radarsignal, die von jeweils einer einzelnen Signalquelle 101-1 und 101-2 erzeugt werden, werden über eine richtungsselektive Struktur 109 zu einer Antenne 105 geleitet. Die richtungsselektive Struktur 109 ist beispielsweise ein Diplexer oder eine Frequenzweiche und hat die Aufgabe, die beiden Signalquellen 101-1 und 101-2 unterschiedlicher Frequenz so zu entkoppeln, dass diese gleichzeitig an der Antenne 105 betrieben werden können. Die Radarsignale werden durch die richtungsselektive Struktur 109 kombiniert, so dass diese gleichzeitig von der Antenne zu der Reflexionsfläche 103 gesendet werden können. In einer alternativen Ausführungsform können aber auch zwei komplett getrennte Einzelsysteme mit je einer eigenen Antenne ohne richtungsselektive Struktur verwendet werden.

Die Sendeenergie einer jeden Signalquelle 101-1 und 101-2 wird zur Antenne 105 geleitet. Diese Signalleitung kann über eine allgemeine Übertragungsleitung erfolgen, wie beispielsweise ein Koaxialkabel oder einen Wellenleiter. Nach Ausstrahlung durch die Antenne 105 breiten sich die elektromagnetischen Wellen des ersten und des zweiten Radarsignals zu der Reflexionsfläche 103 hin aus und werden dann von der Reflexionsfläche 103 zurückreflektiert. Die reflektierten Radarsignalanteile werden durch die Antenne 105 empfangen.

Die richtungsselektive Struktur 109 trennt den ersten und den zweiten empfangenen Radarsignalanteil. Dabei sollen die Radarsignale im Durchgang möglichst wenig gedämpft werden. Daneben sollte die Entkopplung zwischen beiden Eingangskanälen möglichst groß sein, so dass die empfangenen Radarsignalanteile nur in die gewünschte Richtung geleitet werden und die jeweils andere Richtung eine möglichst hohe Dämpfung aufweist.

Weiter umfasst die Abstandserfassungsvorrichtung 100 eine Empfangsvorrichtung 107 zum Empfangen des ersten, an der Reflexionsfläche 103 reflektierten Radarsignalanteils des ersten Radarsignals und zum Empfangen des zweiten, an der Reflexionsfläche 103 reflektierten Radarsignalanteils des zweiten Radarsignals und zum Bestimmen eines ersten Abstandswertes auf der Basis des ersten Phasenunterschieds zwischen dem ersten ausgesendeten Radarsignal und dem ersten reflektierten Radarsignalanteil und eines zweiten Abstandswertes auf der Basis des zweiten Phasenunterschieds zwischen dem zweiten ausgesendeten Radarsignal und dem zweiten reflektierten Radarsignalanteil.

Die Empfangsvorrichtung 107 umfasst einen ersten Korrelator 107-1 zum Bestimmen des ersten Phasenunterschieds und einen zweiten Korrelator 107-1 zum Bestimmen des zweiten Phasenunterschiedes. Der erste Radarsignalanteil wird an den ersten Korrelator 107-1 und der zweite Radarsignalanteil wird an den zweiten Korrelator 107-2 geleitet, so dass die reflektierten Radarsignalanteile an die jeweils dazugehörigen Korrelatoren 107-1 und 107-2 verteilt werden.

Die Korrelatoren 107-1 und 107-2 überlagern das gesendete Radarsignal und den jeweiligen empfangenen Radarsignalanteil und bestimmen dadurch einen Phasenunterschied zwischen dem gesendeten Radarsignal und dem empfangenen Radarsignalanteil. Der Korrelator 107-1 und 107-2 kann beispielsweise ein Multi-Port-Empfänger-Korrelator-Interferometer sein.

Die Radarsignale sind nicht auf sinusförmige CW-Signale beschränkt, sondern es können frequenzmodulierte Dauerstrichsignale (FMCW-Frequency Modulated Continuous Wave), Stufenfrequenz-Dauerstrichsignale (SFCW - Step Frequency Continuous Wave) oder gepulste Signale mit mehreren Frequenzen verwendet werden, die gleichzeitig oder sequenziell geschaltet werden. Im Allgemeinen arbeitet die Erfindung bei beliebigen Frequenzen mit beliebigen Signalen, die von den Signalquellen erzeugt werden.

Wenn die Entfernung zwischen der Abstandserfassungsvorrichtung 100 und der Reflexionsfläche 103 konstant ist, ist der jeweilige Phasenunterschied zwischen dem gesendeten ersten oder zweiten Radarsignal und dem empfangenen ersten oder zweiten Radarsignalanteil ebenfalls konstant. Aus den dem ersten und dem zweiten Phasenunterschied lassen sich über die Wellenlänge der ersten oder zweiten Frequenz ein erster Abstandswert und ein zweiter Abstandswert berechnen.

Sobald sich die Entfernung zwischen der Abstandserfassungsvorrichtung 100 und der Reflexionsfläche 103 ändert, kann für beide Radarsignale eine Veränderung in dem relativen Phasenunterschied mit dem jeweiligen Korrelatoren 107-1 und 107-2 gemessen werden. Die Änderung des ersten Phasenunterschieds hängt von der ersten Frequenz des ersten Radarsignals ab. Die Änderung des zweiten Phasenunterschieds hängt von der zweiten Frequenz des zweiten Radarsignals ab. Ein Radarsignal mit einer höheren Frequenz verursacht eine größere Änderung in einem Phasenunterschied im Vergleich zu einem Radarsignal mit einer niedrigeren Frequenz bei gleicher Verschiebung der Reflexionsfläche 103 bezüglich der Abstandserfassungsvorrichtung 100. Je nach verwendeter Frequenz ergeben sich bei einer Verschiebung der Reflexionsfläche 103 jeweils unterschiedliche Veränderungen des ersten und des zweiten Phasenunterschieds.

Durch Kombinieren und Auswerten der Phasenverschiebungsinformation ist es möglich, die Entfernung zwischen der Abstandserfassungsvorrichtung 100 und der Reflexionsfläche 103 sogar dann zu bestimmen, wenn für jeden einzelnen Korrelator mehrere mehrdeutige, periodische Wiederholungen in dem Phasenunterschied auftreten.

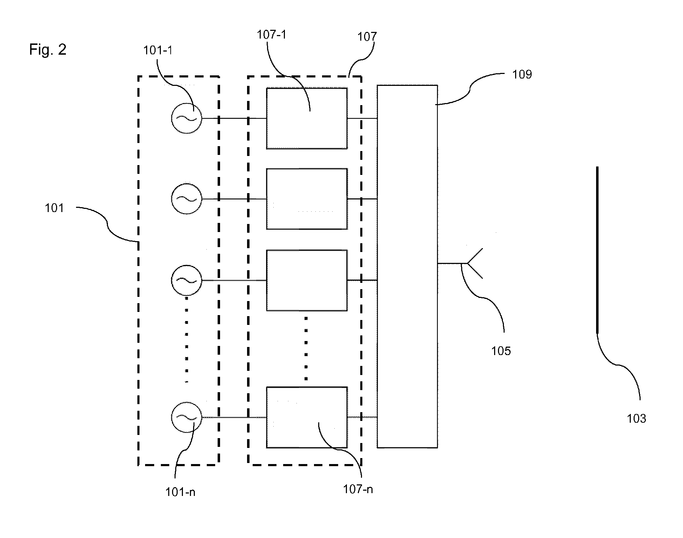

Fig. 2 zeigt eine Ausführungsform der vorliegenden Erfindung, bei der die Sendevorrichtung 101 eine Vielzahl von Signalquellen 101-1 bis 101-n aufweist und die Empfangsvorrichtung 107 eine Vielzahl von Korrelatoren 107-1 bis 107-n aufweist. Durch eine Erhöhung der Anzahl von verwendeten Frequenzen kann der Messbereich vergrößert werden, in dem eine eindeutige Abstandsmessung möglich ist.

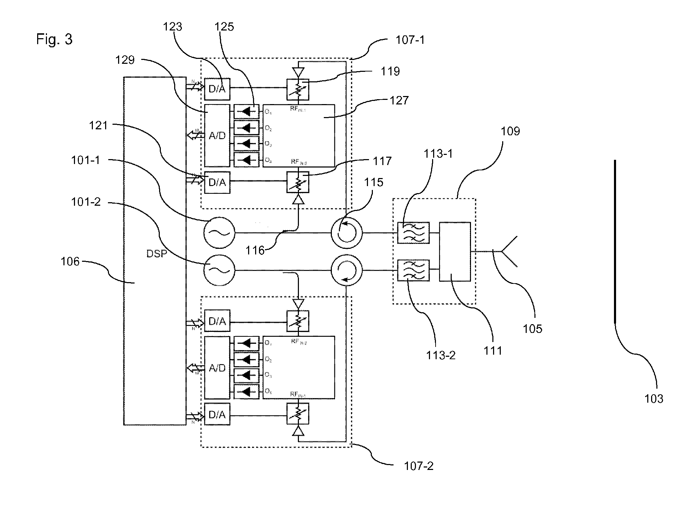

Fig. 3 zeigt eine detaillierte Ansicht der erfindungsgemäßen Abstandserfassungsvorrichtung 100.

Die richtungsselektive Struktur 109 umfasst einen Kombinator 111, der das erste und das zweite Radarsignal von der Radarsignalquelle 101-1 und 101-2 in ein gemeinsames Radarsignal kombiniert, das am Ausgang der richtungsselektiven Struktur 109 ausgegeben wird. Daneben umfasst die richtungsselektive Struktur 109 die Bandpassfilter 113-1 und 113-2, die auf die Frequenzen derjeweiligen Signalquellen 101-1 und 101-2 abgestimmt sind. Die Bandpassfilter 113-1 und 113-2 dienen dazu, die reflektierten Radarsignalanteile, die gemeinsam von der Antenne 105 empfangen werden, je nach Frequenz zu trennen und an den einen Korrelator 107-1 oder den anderen Korrelator 107-2 weiterzuleiten. Dies geschieht dadurch, dass je nach Weg bestimmte Frequenzbereiche gesperrt werden, indem die Bandpassfilter 113-1 und 113-2 auf die jeweils emittierte Frequenz abgestimmt sind. Die Bandpassfilter 113-1 und 113-2 können beispielsweise durch Streifenleiter gebildet sein.

Werden beispielsweise Signalquellen 101-1 und 101-2 mit Frequenzen von 12 GHz und 2.31 GHz verwendet, kann das erste Bandpassfilter 113-1 einen Frequenzbereich von 2 bis 4 GHz durchlassen, während das zweite Bandpassfilter einen Frequenzbereich von 11 bis 13 GHz durchlässt

Der erste Korrelator 107-1 umfasst einen Sechs-Tor-Wellenkorrelator 127 mit zwei Eingängen $RF_{IN-1}$ und $RF_{IN-2}$ und vier Ausgängen $O_1$ bis $O_4$. Ein Teil des von der Signalquelle 101-1 erzeugten ersten Radarsignals wird an der Kopplungsstelle 116 ausgekoppelt und über einen einstellbaren Verstärker 117 in den Eingang $RF_{IN-2}$ eingegeben. Der reflektierte, erste Radarsignalanteil wird von einem Zirkulator 115 abgespalten und über einen einstellbaren Verstärker 119 in den Eingang $RF_{IN-1}$ eingegeben. Der Zirkulator 115 ist ein Bauelement oder eine Schaltung zur Auftrennung von Signalrichtungen.

Innerhalb des Sechs-Tor-Wellenkorrelators 127 wird der Phasenunterschied des von der Signalquelle 101-1 erzeugten ersten Radarsignals und des empfangenen, ersten Radarsignalanteil bestimmt. Im Allgemeinen führt das zu vier unterschiedlichen Ausgangssignalen, die aus einer destruktiven oder konstruktiven Interferenz der zwei Eingangssignale $RF_{IN-1}$ und $RF_{IN-2}$ resultieren. Daher hängt die Leistung der resultierenden Ausgangssignale hochgenau mit der relativen Phasenverschiebung des ersten Radarsignals und des empfangenen, ersten Radarsignalanteils zusammen.

Die vier Ausgangssignale werden über die vier Ausgänge $O_1$ bis $O_4$ ausgegeben. Die Ausgänge $O_1$ bis $O_4$ sind jeweils mit einem Diodenleistungsdetektor 125 verbunden, der eine Spannung $P_1$ bis $P_4$ liefert, die proportional zu der Leistung des jeweiligen Ausgangssignals ist.

Die Spannungen $P_1$ bis $P_4$ werden einem Analog-Digital-Umsetzer 129 zugeführt, der die jeweiligen analogen Spannungen $P_1$ bis $P_4$ in digitale Werte umsetzt.

Die digitalen Werte der Spannungen $P_1$ bis $P_4$ werden danach einer Bestimmungsvorrichtung 106 mit einer analogen oder digitalen Verarbeitungsmöglichkeit der zugeführten Information zugeführt, wie beispielsweise einem digitalen Signalprozessor oder einem Computer, der den Phasenunterschied berechnet. Die Spannungen $P_1$, $P_2$, $P_3$ und $P_4$ hängen direkt mit der Phasenverschiebung σ zwischen den Eingangssignalen zusammen, durch:

$$\sigma = \tan^{-1}\left(\frac{P_1 - P_2}{P_3 - P_4}\right).$$

$$(1)$$

Der technische Vorteil des Sechs-Tor-Wellenkorrelators 127 ist die passive Signalüberlagerung in der Mikrowellendomäne, die hochgenaue Messergebnisse sicherstellt.

Daneben ist die Bestimmungsvorrichtung 106 über den Digital-Analog-Umsetzer 121 mit dem variablen Dämpfungsglied 117 und über den Digital-Analog-Umsetzer 123 mit dem variablen Dämpfungsglied 119 verbunden. Dadurch ist es möglich, die Diodenleistungsdetektoren 125 optimal auszusteuern.

Der zweite Korrelator 107-2 ist in gleicher Weise aufgebaut, wie der erste Korrelator 107-1 und dient zum Bestimmen eines Phasenunterschieds des von der zweiten Signalquelle 101-2 erzeugten zweiten Radarsignals und des empfangenen, zweiten Radarsignalanteils mit der zweiten Frequenz.

Durch die in Fig. 3 gezeigte Anordnung ist es möglich, einen ersten Phasenunterschied bei einer ersten Frequenz und einen zweiten Phasenunterschied bei einer zweiten Frequenz zu erhalten. Diese beiden Phasenunterschiede ändern sich je nach Abstand der Abstandserfassungsvorrichtung 100 zu der Reflexionsfläche 103 in unterschiedlicher Weise. Dieser Effekt dient dazu, einen Bereich zu vergrößern, in dem eine Abstandsmessung eindeutig durchgeführt werden kann.

Im Allgemeinen können jedoch auch andere Anordnungen und Schaltungen als die gezeigten verwendet werden, durch die es möglich ist, die jeweiligen Phasenunterschiede zu bestimmen. Beispielsweise könne auch Interferometer zur Bestimmung eines Phasenunterschieds verwendet werden.

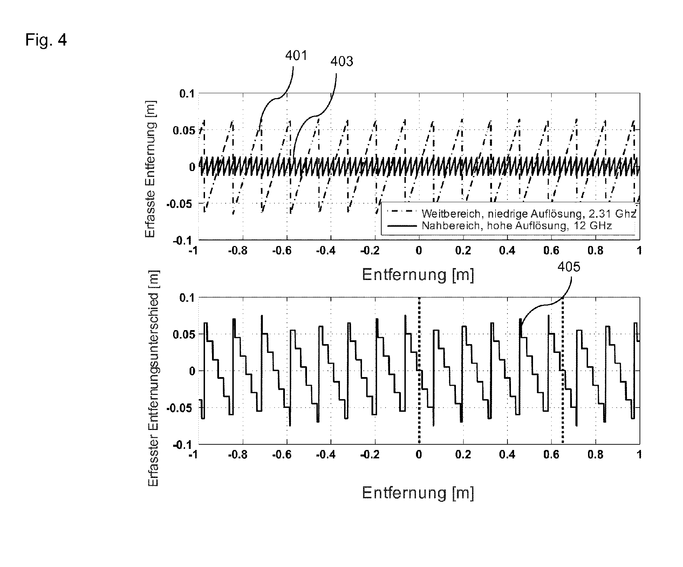

Fig. 4 zeigt im oberen Teil ermittelte Abstandswerte, bei einer ersten Frequenz und bei einer zweiten Frequenz in Abhängigkeit einer Entfernung zwischen der Abstandserfassungsvorrichtung 100 und der Reflexionsfläche 103.

Der Verlauf 401 zeigt den mit der ersten Frequenz von 2.31 GHz ermittelten ersten Abstandswert in Abhängigkeit des tatsächlichen Abstandes zwischen der Abstandserfassungsvorrichtung 100 und der Reflexionsfläche 103. Die Wellenlänge bei einer Frequenz von 2.31 GHz beträgt 12,9 cm. Daher weist der Verlauf 401 eine Amplitude vom +/- 6,45 cm auf. In einem Bereich der Wellenlänge von 12,9 cm ist daher eine eindeutige Abstandsmessung mit der ersten Frequenz anhand des ersten Phasenunterschieds möglich. Bewegt sich die Reflexionsfläche 103 über eine größere Strecke als 12.9 cm findet ein Phasensprung statt. Wird dieser Phasensprung vernachlässigt, ergibt sich aus dem Phasenunterschied ein Abstandswert, der erneut in einem Bereich zwischen einer Amplitude von +/- 6,45 cm liegt. Dadurch entsteht die gezeigte Sägezahnform des Verlaufs 401.

Der Verlauf 403 zeigt den mit der zweiten Frequenz von 12.0 GHz ermittelten zweiten Abstandswert in Abhängigkeit des tatsächlichen Abstandes zwischen der Abstandserfassungsvorrichtung 100 und der Reflexionsfläche 103. Die Wellenlänge bei einer Frequenz von 12.0 GHz beträgt 2.5 cm. Daher weist der Verlauf 403 eine Amplitude vom +/- 1.25 cm auf. In einem Bereich der Wellenlänge von 2.5 cm ist daher eine eindeutige Abstandsmessung mit der zweiten Frequenz anhand des zweiten Phasenunterschieds möglich. Auch in diesem Fall ergibt sich eine Sägezahnform des Verlaufs 403.

Der untere Teil aus Fig. 4 zeigt den Verlauf einer Differenzfunktion 405, die sich durch eine Subtraktion des Verlaufs 401 vom Verlauf 403 ergibt. Die Differenzfunktion 405 ist eine Stufenfunktion, deren Stufen im Mittelbereich eine Breite von 2.5 cm aufweisen.

In dieser Weise wird eine Differenzfunktion 405 erzeugt, die eine Periodizität aufweist, die von dem Verhältnis zwischen den Perioden der zwei Verlaufsfunktionen 401 und 403 abhängt. Die Höhe der einzelnen Stufen der Differenzfunktion wiederholt sich für die angegebenen Frequenzwerte mit einer Periode von 65 cm. Diese Periode ist durch den Bereich zwischen den gepunktet eingezeichneten Linien dargestellt.

Falls das Frequenzverhältnis zwischen dem ersten Radarsignal und dem zweiten Radarsignal als nicht-ganzzahlige Zahl gewählt wird, ist die resultierende Periode der Differenzfunktion 405 größer als die Perioden des ersten und des zweiten Abstandswertes.

Da die Differenzfunktion 405 eine Stufenfunktion mit wohldefinierten Bereichen ist, innerhalb deren ein konstanter Wert auftritt, kann die Periodenüberlagerung innerhalb eines breiteren Entfernungsbereiches identifiziert werden. Aus der Eindeutigkeit der Stufen über den breiteren Entfernungsbereich ist es möglich, den Eindeutigkeitsbereich der Messung zu erhöhen.

Durch Analysieren der Differenzfunktion kann die tatsächliche Phase einschließlich des Phasensprungs für einen gemessenen Abstandswert bestimmt werden. Durch ein Kompensieren eines Versatzes (Offset), ein Vorkalibrierungsverfahren, einen selbstlernenden Algorithmus oder logisches Aufbereiten (Conditioning) der Ergebnisse kann die Mehrdeutigkeit in einer Phase des ersten oder zweiten Abstandswertes beseitigt werden.

Der jeweilige Versatz-, Kalibrierungs- oder Korrekturfaktor kann "a priori" während eines Kalibrierungsverfahrens gewonnen werden. Zum Beispiel kann jeder Stufe der Differenzfunktion 405 ein statischer Versatzwert zugeordnet werden, der zu der Phaseninformation des ersten oder zweiten Abstandwertes hinzuaddiert wird. Vorteilhaft ist es, denjenigen Abstandswert mit der höchsten Arbeitsfrequenz zu verwenden, da sich hierdurch die genauesten Ergebnisse erzielen lassen.

Beispielsweise senden die Signalquellen 101-1 und 101-2 Radarsignale mit zwei unterschiedlichen Frequenzen mit den Wellenlängen $\lambda_1$ und $\lambda_2$ aus.

Die Wellenlängen, die als Ganzzahlen ausgedrückt werden, können mathematisch als das Produkt von Primzahlen ausgedrückt werden:

$$\lambda_i = \prod p^{\lambda_{ip}}; \tag{2}$$

mit $i$=1;2 für $p$={1,...,∞}. Die Exponenten $\lambda_{ip}$ sind nicht-negative Ganzzahlen, die eine eindeutige Darstellung für jede Wellenlänge $\lambda_1$ und $\lambda_2$ bilden. Der Messbereich ohne Mehrdeutigkeiten, der aus der Differenz der beiden Werte abgeleitet wird, kann daher berechnet werden als:

$$P[\mathrm{diff}] = lcm(\lambda_1, \lambda_2) = \prod p^{max(\lambda_{1p}, \lambda_{2p})} \tag{3}$$

wobei für *lcm* das kleinste gemeinsame Vielfache der Werte $\lambda_1$ und $\lambda_2$ ist.

In dem in Fig. 4 gezeigten Fall erhält man ein nicht-ganzzahligen Verhältnis von 5,2 zwischen der ersten Radarsignalfrequenz von 2.31 GHz und der Radarsignalfrequenz von 12 GHz.

Der dargestellte Bereich ohne Mehrdeutigkeiten der Differenzfunktion 405 von 0,65 m entspricht dem kleinsten gemeinsamen Vielfachen zwischen der ersten Wellenlänge und der zweiten Wellenlänge In diesem Fall weist die Differenzfunktion 405 31 eindeutige Stufen innerhalb des angegebenen Bereiches auf. Anhand dieser Stufen kann ein Wert bestimmt werden, der zu dem ersten oder zweiten Abstandswert hinzuaddiert wird, um den Abstand zu erhalten. Zu diesem Zweck können die Werte der Stufen in der Differenzfunktion 405 mittels eines geeigneten Verfahrens vorausberechnet werden und einem Versatzwert zugeordnet werden, der zu dem Abstandwert hinzuaddiert wird. Die Bestimmungsvorrichtung 106 kann zu diesem Zweck eine Tabelle mit digital gespeicherten Werten umfassen, anhand der ein Vergleich eines ermittelten Differenzwertes mit einem gespeicherten Referenzwert vorgenommen werden kann.

Je größer der Bereich ohne Mehrdeutigkeiten verglichen mit der kleinsten Wellenlänge des Systems ist, desto mehr Schritte weist die Differenzfunktion 405 auf.

Im Allgemeinen können der erste Abstandswert und der zweite Abstandswert jedoch auch in anderer Weise kombiniert werden, um den Eindeutigkeitsbereich der Messung zu erhöhen.

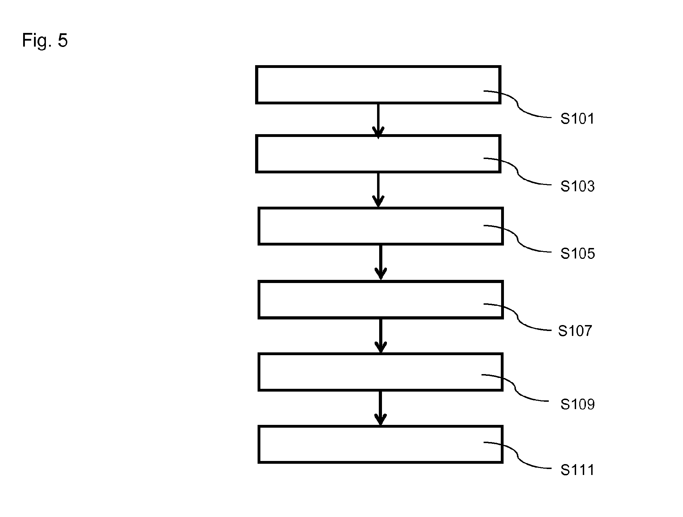

Fig. 5 zeigt ein Blockdiagramm mit den erfindungsgemäßen Verfahrensschritten S101 bis S111. Im Schritt S101 wird ein erstes Radarsignal mit einer ersten Frequenz in Richtung einer Reflexionsfläche 103 ausgesendet. Im Schritt S103 wird ein zweites Radarsignal mit einer zweiten Frequenz in Richtung der Reflexionsfläche 103 ausgesendet. Im Schritt S105 wird ein erster, an der Reflexionsfläche reflektierter Radarsignalanteil des ersten Radarsignals empfangen. Im Schritt S107 wird ein zweiter, an der Reflexionsfläche reflektierter Radarsignalanteil des zweiten Radarsignals empfangen. Im Schritt S109 werden ein erster Phasenunterschied zwischen dem ersten ausgesendeten Radarsignal und dem ersten reflektierten Radarsignalanteil und ein zweiter Phasenunterschied zwischen dem zweiten ausgesendeten Radarsignal und dem zweiten reflektierten Radarsignalanteil bestimmt. Im Schritt S111 wird ein Abstand zwischen der Abstandserfassungsvorrichtung 100 und der Reflexionsfläche 103 auf Basis des ersten Phasenunterschieds und des zweiten Phasenunterschieds bestimmt.

Die genannten Schritte können sequenziell oder gleichzeitig ausgeführt werden. Weiterhin ist das Verfahren nicht auf zwei Frequenzen beschränkt.

Die vorliegende Erfindung kann ebenfalls durch eine einzige Signalquelle mit variabler Frequenz und einem einzigen Korrelator oder Interferometer realisiert werden, bei dem nacheinander Radarsignale mit den gewünschten Frequenzen ausgegeben werden. In diesem Fall können die jeweiligen Abstandswerte durch sequenzielles Wiederholen von Messungen statt durch Verwenden einer Parallelarchitektur gewonnen werden.

Eine andere Möglichkeit ist es, einen Breitband-Korrelator für mehrere Frequenzen der Radarsignale gleichzeitig zu verwenden. Die entsprechend umgesetzten Radarsignale werden an den Ausgängen des Korrelators durch ein frequenzselektives Filtern getrennt oder werden direkt durch eine digitale Signalverarbeitung analysiert. In diesem Fall kann beispielsweise ein Sechs-Tor basierter Breitbandkorrelator mit gleichzeitiger Anregung durch zwei oder mehr Signalquellen mit unterschiedlicher Frequenz verwendet werden. Die Trennung der zwei empfangenen Radarsignalanteile kann beispielsweise an den Ausgängen der genannten Sech-Tor-Schaltung implementiert sein.

Statt einem Korrelator oder einem Interferometer kann jedoch auch jede andere Phasenbestimmungsvorrichtung verwendet werden, die geeignet ist, einen Phasenunterschied zwischen dem ausgesendeten Radarsignal und dem ersten reflektierten Radarsignalanteil zu bestimmen.

Die erfindungsgemäße Abstandserfassungsvorrichtung weist den Vorteil auf, dass diese mit geringem technischen Aufwand und einer niedrigen Komplexität realisiert werden kann. Mögliche Einsatzgebiete sind eine industrielle Automation, drahtlose Bewegungsscanner für Verbraucher, beispielsweise Mikrofone mit hoher Reichweite oder Spielesteuerungen, medizinische Anwendungen, beispielsweise kontaktlose Herzschlag- und Atemmessungen. Im Allgemeinen kann die vorliegende Erfindung in allen Anwendungen eingesetzt werden, bei denen Entfernungen exakt gemessen werden sollen oder Gegenstände gegeneinander exakt positioniert oder lokalisiert werden sollen.

Die vorliegende Erfindung ermöglicht eindeutige, interferometrische Entfernungsmessungen für Entfernungen von mehreren Wellenlängen mit einer Genauigkeit im Subwellenlängenbereich durch eine Analyse eines Phasenunterschieds. Vorteilhaft ist es, zwei oder mehr Radarsignale mit unterschiedlichen Trägerfrequenzen zu verwenden, die als nicht-ganzzahlige Vielfache in Abhängigkeit des eindeutigen Bereiches gewählt werden. Durch eine Analyse des Phasenunterschieds können Mehrdeutigkeiten beseitigt werden.

Alle in den Zeichnungen gezeigten und in der Beschreibung beschriebenen Einzelmerkmale der Erfindung können in beliebiger, sinnvoller Art und Weise miteinander kombiniert werden, so dass deren vorteilhafte Wirkungen gleichzeitig realisiert werden können. Die Erfindung ist nicht auf die in Verbindung mit den Zeichnungen erläuterten Ausführungsbeispiele beschränkt, sondern durch den Schutzbereich der Ansprüche gegeben.


BEZUGSZEICHENLISTE

| | |
|---|---|
| 100 | Abstandserfassungsvorrichtung |
| 101 | Sendevorrichtung |
| 101-1 bis 101-n | Signalquellen |
| 103 | Reflexionsfläche |
| 105 | Antenne |
| 106 | Bestimmungsvorrichtung |
| 107 | Empfangsvorrichtung |
| 107-1 bis 107-n | Korrelatoren |
| 109 | richtungsselektive Struktur |
| 111 | Kombinator |
| 113-1 | Bandpassfilter |
| 113-2 | Bandpassfilter |
| 115 | Zirkulator |
| 116 | Richtkoppler |
| 117 | variables Dämpfungsglied |
| 119 | variables Dämpfungsglied |
| 121 | Digital-Analog-Umsetzer |
| 123 | Digital-Analog-Umsetzer |
| 125 | Diodenleistungsdetektor |
| 127 | Sechs-Tor-Wellenkorrelator |
| 129 | Analog-Digital-Umsetzer |
| 401 | Verlauf |

403          Verlauf
405          Differenzfunktion
S101 bis S111    Verfahrensschritte

**Patentansprüche**

1. Elektronische Abstandserfassungsvorrichtung (100), mit:

    einer Sendevorrichtung (101) zum Aussenden eines ersten Radarsignals mit einer ersten Frequenz in Richtung einer Reflexionsfläche (103) und zum Aussenden eines zweiten Radarsignals mit einer zweiten Frequenz in Richtung der Reflexionsfläche (103);
    einer Empfangsvorrichtung (107) zum Empfangen eines ersten, an der Reflexionsfläche (103) reflektierten Radarsignalanteils des ersten Radarsignals und zum Empfangen eines zweiten, an der Reflexionsfläche (103) reflektierten Radarsignalanteils des zweiten Radarsignals und zum Bestimmen eines ersten Phasenunterschieds zwischen dem ersten ausgesendeten Radarsignal und dem ersten reflektierten Radarsignalanteil und eines zweiten Phasenunterschieds zwischen dem zweiten ausgesendeten Radarsignal und dem zweiten reflektierten Radarsignalanteil; und
    einer Bestimmungsvorrichtung (106) zum Bestimmen des Abstands zwischen der Abstandserfassungsvorrichtung (100) und der Reflexionsfläche (103) auf Basis des ersten Phasenunterschieds und des zweiten Phasenunterschieds.

2. Abstandserfassungsvorrichtung (100) nach Anspruch 1, wobei die Empfangsvorrichtung (107) einen Breitband-Korrelator oder ein Breitband-Interferometer zum Bestimmen des ersten Phasenunterschiedes und des zweiten Phasenunterschiedes umfasst.

3. Abstandserfassungsvorrichtung (100) nach Anspruch 1, wobei die Empfangsvorrichtung (107) einen ersten Korrelator (107-1) zum Bestimmen des ersten Phasenunterschieds und einen zweiten Korrelator (107-1) zum Bestimmen des zweiten Phasenunterschiedes umfasst.

4. Abstandserfassungsvorrichtung (100) nach einem der vorangehenden Ansprüche, wobei die Sendevorrichtung (101) eine Signalquelle mit einstellbarer Frequenz zum Erzeugen des ersten Radarsignals mit der ersten Frequenz und des zweiten Radarsignals mit der zweiten Frequenz umfasst.

5. Abstandserfassungsvorrichtung (100) nach einem der vorangehenden Ansprüche, wobei die Sendevorrichtung (101) eine erste Signalquelle (101-1) zum Erzeugen des ersten Radarsignals mit der ersten Frequenz und eine zweite Signalquelle (101-2) zum Erzeugen des zweiten Radarsignals mit der zweiten Frequenz umfasst.

6. Abstandserfassungsvorrichtung (100) nach einem der vorangehenden Ansprüche, wobei die Abstandserfassungsvorrichtung (100) eine richtungsselektive Struktur (109) zum Kombinieren des ersten Radarsignals und des zweiten Radarsignals und zum Trennen des empfangenen ersten Radarsignalanteils und des zweiten Radarsignalanteils umfasst.

7. Verfahren zur Abstandserfassung mit einer Abstandserfassungsvorrichtung (100), mit den Schritten:

    Aussenden (S101) eines ersten Radarsignals mit einer ersten Frequenz in Richtung einer Reflexionsfläche (103);
    Aussenden (S103) eines zweiten Radarsignals mit einer zweiten Frequenz in Richtung der Reflexionsfläche (103);
    Empfangen (S105) eines ersten, an der Reflexionsfläche reflektierten Radarsignalanteils des ersten Radarsignals;
    Empfangen (S107) eines zweiten, an der Reflexionsfläche reflektierten Radarsignalanteils des zweiten Radarsignals; und
    Bestimmen (S109) eines ersten Phasenunterschieds zwischen dem ersten ausgesendeten Radarsignal und dem ersten reflektierten Radarsignalanteil und eines zweiten Phasenunterschieds zwischen dem zweiten ausgesendeten Radarsignal und dem zweiten reflektierten Radarsignalanteil; und
    Bestimmen (S111) eines Abstands zwischen der Abstandserfassungsvorrichtung (100) und der Reflexionsfläche (103) auf Basis des ersten Phasenunterschieds und des zweiten Phasenunterschieds.

8. Verfahren nach Anspruch 7, weiter mit dem Schritt eines Berechnen eines Differenzwertes auf Basis des ersten Phasenunterschieds und des zweiten Phasenunterschieds

9. Verfahren nach Anspruch 8, weiter mit dem Schritt eines Berechnens einer Differenzfunktion aus einer Vielzahl von Differenzwerten in Abhängigkeit unterschiedlicher Abstände der Reflexionsfläche (103).

10. Verfahren nach Anspruch 9, weiter mit dem Schritt eines Bestimmens des Abstandes zur Reflexionsfläche mittels eines Vorkalibrierungsverfahrens oder eines selbstlernenden Algorithmus.

11. Verfahren nach Anspruch 9 oder 10, weiter mit dem Schritt eines Vergleichens der Differenzfunktion mit einer Referenzdifferenzfunktion, um den Abstand zur Reflexionsfläche (103) zu erhalten.

12. Verfahren nach einem der Ansprüche 7 bis 11, wobei die erste Frequenz ein nichtganzzahliges Vielfaches der zweiten Frequenz ist.

13. Verfahren nach einem der Ansprüche 7 bis 12, wobei das erste Radarsignal und das zweite Radarsignal gleichzeitig ausgesendet werden.

14. Verfahren nach einem der Ansprüche 7 bis 13, wobei der erste Radarsignalanteil und der zweiten Radarsignalanteil gleichzeitig empfangen werden.

15. Verfahren nach einem der Ansprüche 7 bis 14, wobei das erste Radarsignal oder das zweite Radarsignal ein sinusförmiges Dauerstrichsignal, ein frequenzmoduliertes Dauerstrichsignal, ein Stufenfrequenz-Dauerstrichsignal oder ein gepulstes Radarsignal ist.

Fig. 1

100

101-1    107-1

101    101-2    107    107-2    109    105    103

Fig. 2

Fig. 3

Fig. 4

Fig. 5

S101

S103

S105

S107

S109

S111

Europäisches
Patentamt

European
Patent Office

Office européen
des brevets

# EUROPÄISCHER RECHERCHENBERICHT

**Nummer der Anmeldung**

EP 12 17 4439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MEINECKE M-M ET AL: "Combination of LFMCW and FSK Modulation Principles for Automotive Radar Systems", INTERNET CITATION, 11. Oktober 2000 (2000-10-11), XP002195247, Gefunden im Internet: URL:www.smartmicro.de/html/publications.html [gefunden am 2002-04-05] * Sätze 1-2,10-11, Absatz 2; Abbildung 1 * * Sätze 1-4, Absatz 3 * ----- | 1,4,7-15 | INV. G01S13/38 |
| X | WO 2012/007985 A1 (NIRECO CORP [JP]; MATSUMOTO KOICHI [JP]; KATO YASUMASA [JP]) 19. Januar 2012 (2012-01-19) * Zusammenfassung * * Abbildung 3 * ----- | 1-3,5-7, 9-15 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 10. Oktober 2012 | Metz, Carsten |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
    Dokument

EPO FORM 1503 03.82 (P04C03)

**EP 2 680 032 A1**

**ANHANG ZUM EUROPÄISCHEN RECHERCHENBERICHT
ÜBER DIE EUROPÄISCHE PATENTANMELDUNG NR.**

EP 12 17 4439

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2012

| Im Recherchenbericht angeführtes Patentdokument | Datum der Veröffentlichung | Mitglied(er) der Patentfamilie | Datum der Veröffentlichung |
|---|---|---|---|
| WO 2012007985 A1 | 19-01-2012 | TW 201202729 A<br>WO 2012007985 A1 | 16-01-2012<br>19-01-2012 |

EPO FORM P0461

Für nähere Einzelheiten zu diesem Anhang : siehe Amtsblatt des Europäischen Patentamts, Nr.12/82